(19) Europäisches Patentamt / European Patent Office / Office européen des brevets

(11) **EP 4 151 607 A1**

(12) **EUROPEAN PATENT APPLICATION**
published in accordance with Art. 153(4) EPC

(43) Date of publication:
**22.03.2023 Bulletin 2023/12**

(21) Application number: **21832686.6**

(22) Date of filing: **30.06.2021**

(51) International Patent Classification (IPC):
**C03C 3/085** $^{(2006.01)}$     **C03C 3/087** $^{(2006.01)}$
**C03C 21/00** $^{(2006.01)}$

(52) Cooperative Patent Classification (CPC):
**C03C 3/085; C03C 3/087; C03C 21/00**

(86) International application number:
**PCT/JP2021/024818**

(87) International publication number:
**WO 2022/004808 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 JP 2020112978**

(71) Applicant: **NIPPON SHEET GLASS COMPANY, LIMITED**
**Tokyo 108-6321 (JP)**

(72) Inventors:
• **KITAYAMA, Akira**
**Tokyo 108-6321 (JP)**
• **KURACHI, Junji**
**Tokyo 108-6321 (JP)**

(74) Representative: **Cabinet Beau de Loménie**
**158, rue de l'Université**
**75340 Paris Cedex 07 (FR)**

(54) **GLASS COMPOSITION FOR CHEMICAL STRENGTHENING AND CHEMICALLY STRENGTHENED GLASS ARTICLE**

(57)     The present disclosure provides a glass composition which is for chemical strengthening, from which a glass sheet can be produced by a common float process, and which is suitable for achieving both a surface compressive stress and a compressive stress layer depth. The glass composition according to the present disclosure includes, as components, in mol%: 60 to 80% $SiO_2$; 1 to 5% $Al_2O_3$; 5 to 25% MgO; 0 to 5% CaO; 10 to 20% $Na_2O$; and 0 to 10% $K_2O$. A chemically strengthened glass article, for example, having a surface compressive stress of 500 MPa or more and a compressive stress layer depth of 10 $\mu$m or more can be provided using the glass composition.

**EP 4 151 607 A1**

**Description**

TECHNICAL FIELD

The present invention relates to a glass composition suitable for chemical strengthening and particularly relates to a glass composition suitable for cover glasses of displays. The present invention also relates to a chemically strengthened glass article formed from the glass composition, and even a mobile information device (such as a smartphone or a tablet) including the glass article, a digital signage including the glass article, an in-car display including the glass article, and a protective case including the glass article and protecting a mobile information device.

BACKGROUND ART

A great strength against bending and impact has been required of cover glasses of displays. One known means for achieving such a strength is to use, as a glass composition, an aluminosilicate glass composition including a large amount of $Al_2O_3$. However, the temperature needs to be higher than 1600°C to melt known aluminosilicate glass compositions because of high viscosities of glass melts thereof, and thus it is difficult to employ a float process suitable for mass production of glass sheets. Moreover, the known aluminosilicate glass compositions have the following disadvantages: homogenization of the glass melts is difficult due to the high viscosities thereof, and that makes it hard to increase the yields of glass articles; a large amount of an expensive raw material is needed as a glass component; high-temperature operation that is necessary as described above requires a large amount of heating energy, which increases the cost. Patent Literature 1 discloses a glass composition for chemical strengthening that can be molten at a temperature lower than 1600°C.

CITATION LIST

Patent Literature

Patent Literature 1: WO 2015/147092 A1

SUMMARY OF INVENTION

Technical Problem

Commonly, chemically strengthened glass articles having a large compressive stress layer depth do not have a very large surface compressive stress, while chemically strengthened glass articles having a large surface compressive stress do not have a very large compressive stress layer depth.
It is accordingly an object of the present invention to provide a glass composition which is for chemical strengthening, from which a glass sheet can be produced by a common float process, and which is suitable for achieving both the surface compressive stress and the compressive stress layer depth in appropriate ranges. The present invention also aims to provide a chemically strengthened glass article achieving an appropriate balance between the surface compressive stress and the compressive stress layer depth.

Solution to Problem

As a result of energetic studies of the contents of components in an aluminosilicate glass and the physical properties thereof, the present inventor has successfully achieved the above object.
The present invention provides a glass composition for chemical strengthening including, as components, in mol%:

60 to 80% $SiO_2$;
1 to 5% $Al_2O_3$;
5 to 25% MgO;
0 to 5% CaO;
10 to 20% $Na_2O$; and
0 to 10% $K_2O$.

The present invention further provides a chemically strengthened glass article including the glass composition for chemical strengthening, wherein

a surface compressive stress is 500 MPa or more, or even 550 MPa or more, and
a compressive stress layer depth is 10 $\mu$m or more.

Advantageous Effects of Invention

According to the present invention, a glass composition which is for chemical strengthening, from which a glass sheet can be produced by a common float process, and which is suitable for achieving both the surface compressive stress and the compressive stress layer depth in appropriate ranges can be provided. Moreover, according to the present invention, a chemically strengthened glass article achieving an appropriate balance between the surface compressive stress and the compressive stress layer depth can be provided.

DESCRIPTION OF EMBODIMENTS

Hereinafter, the symbol % used to indicate the contents of components of a glass composition is "mol%" unless otherwise specified. Preferred ranges of the contents of components, the sum totals of the components, ratios determined by given expressions, property values of glass, etc. can be obtained by combining any of preferred upper and lower limits individually described below. Hereinafter, for simplicity of description, the content of a component in mol% is sometimes expressed as [X]. The X represents a component forming a glass composition. Accordingly, for example, $[SiO_2] + [Al_2O_3]$ means the sum of the content of $SiO_2$ in mol% and the content of $Al_2O_3$ in mol%. $[R_2O]$ means the sum of $[Li_2O]$, $[Na_2O]$, and $[K_2O]$ ($[R_2O] = [Li_2O] + [Na_2O] + [K_2O]$), and [RO] means the sum of [MgO], [CaO], [SrO], and [BaO] ([RO] = [MgO] + [CaO] + [SrO] + [BaO]).
Hereinafter, the term "substantially free" is used to mean that the content of a component is limited to less than 0.1 mol%, preferably less than 0.07 mol%, and even more preferably less than 0.05 mol%. Industrially produced glass compositions often contain a small amount of impurities derived from, for example, an industrial raw material. The term "substantially" is used to mean that inevitable impurities are allowed to be contained as long as the upper limit of the content thereof is as described above. Additionally, the following description of embodiments of the present invention is not intended to limit the present invention to specific embodiments.
$SiO_2$ is a component forming a network structure of a glass. The content of $SiO_2$ is preferably 80% or less, 75% or less, 72% or less, or 68% or less, and may be 67% or less in some cases, or 66% or less depending on the contents of other components. The content of $SiO_2$ is preferably 60% or more, 61% or more, 62% or more, or 63% or more, and may be 64% or more in some cases, or 65% or more depending on the contents of other components. Too high a content of $SiO_2$ increases the viscosity of the glass, greatly increases a temperature T2 at which the viscosity is $10^2$ dPa•s, and decreases the meltability of the glass. Too low a content of $SiO_2$ causes devitrification of the glass and decreases the weather resistance.
$Al_2O_3$ is a component that increases ion exchange performance of the glass and improves the surface compressive stress achieved after chemical strengthening. Too high a content of $Al_2O_3$ increases the viscosity and devitrification temperature of the glass and decreases the meltability thereof. On the other hand, too low a content of $Al_2O_3$ makes it impossible to obtain a high surface compressive stress after chemical strengthening. The content of $Al_2O_3$ is preferably 5% or less, 4.9% or less, or 4.5% or less, and may be, in some cases, 4% or less. The content of $Al_2O_3$ is preferably 1% or more, 2.5% or more, or 3% or more, and may be, in some cases, 3.5% or more.
A molar ratio $[Al_2O_3]/([SiO_2] + [Al_2O_3])$ is a parameter affecting the resistance to hydrofluoric acid of the glass composition. When this ratio is large, the resistance to hydrofluoric acid tends to decrease. When this ratio is too small, on the other hand, the viscosity tends to increase. From this point of view, $[Al_2O_3]/([SiO_2] + [Al_2O_3])$ is preferably 0.015 or more, 0.02 or more, or particularly 0.04 or more, and may be, in some cases, 0.05 or more. $[Al_2O_3]/([SiO_2] + [Al_2O_3])$ is preferably 0.072 or less, 0.07 or less, or particularly 0.067 or less, and may be, in some cases, 0.06 or less.
MgO is a component that makes devitrification of the glass less likely, and is also a component that increases the glass-transition point and improves the surface compressive stress achieved after chemical strengthening. While $Al_2O_3$ having the increasing effect on the surface compressive stress achieved after chemical strengthening increases the viscosity of a glass melt, MgO has a decreasing effect on the viscosity of the glass melt, too. However, too high a content of MgO is likely to cause devitrification of the glass. On the other hand, too low a content of MgO decreases the chemical resistance, such as the acid resistance and the alkali resistance, of the glass and the water resistance of the glass. The content of MgO is preferably 5% or more, 7% or more, 9.5% or more, 10% or more, 12% or more, or particularly 13% or more. The content of MgO is preferably 25% or less, 20% or less, 18% or less, 17% or less, or particularly 15% or less, and may be, in some cases, 10% or less.
CaO is a component that makes devitrification of the glass less likely. However, unlike MgO, CaO has a decreasing effect on the surface compressive stress achieved after chemical strengthening. Too high a content of CaO is likely to cause devitrification. On the other hand, too low a content of CaO decreases the chemical resistance, such as the alkali resistance, of the glass. The content of CaO may be 0% or more, 0.01% or more, or 0.05% or more. The content of CaO is preferably 1% or less, 0.7% or less, 0.5% or less, or particularly 0.1% or less.

[MgO] + [CaO], which means the sum of the contents of MgO + CaO, is preferably 9 to 20%, or even 10 to 19%.

When a molar ratio [MgO]/([CaO] + [MgO]) is 0.8 or more, the compressive stress layer depth after chemical strengthening can be increased. This effect is suitably exhibited when the molar ratio [MgO]/([CaO] + [MgO]) is 0.9 or more, 0.91 or more, or particularly 0.92 or more. On the other hand, when this molar ratio is too low, the devitrification temperature of the glass increases. The molar ratio [MgO]/([CaO] + [MgO]) is preferably 1 or less, particularly 0.97 or less. Preferred ranges of the molar ratio [MgO]/[RO] are the same as those described for the molar ratio [MgO]/([CaO] + [MgO]).

$Na_2O$ is a component that decreases the viscosity of the glass. However, too high a content of $Na_2O$ excessively decreases the water resistance of the glass. On the other hand, too low a content of $Na_2O$ increases the viscosity of the glass and decreases the meltability thereof. The content of $Na_2O$ is preferably 10% or more, 12.5% or more, 15% or more, or particularly 15.5% or more, or, in some cases, 16% or more. The content of $Na_2O$ is preferably 20% or less, 19% or less, or 18% or less.

$K_2O$ is an optional component that suppresses devitrification when added in a small amount. However, too high a content of $K_2O$ cannot achieve a desirable surface compressive stress after chemical strengthening. The content of $K_2O$ may be 0% or more, or particularly 0.01% or more, or, in some cases, 0.05% or more. The content of $K_2O$ may be 10% or less, 5% or less, 1.5% or less, 1% or less, or, in some cases, 0.1% or less.

$[Na_2O]$ + $[K_2O]$ is desirably adjusted to 10 to 30% to maintain the viscosity of the glass in an appropriate range and not to decrease the meltability thereof. When $[Na_2O]$ + $[K_2O]$ is too low, the viscosity of the glass melt is very high and the devitrification resistance of the glass decreases. On the other hand, when $[Na_2O]$ + $[K_2O]$ is too high, the water resistance of the glass decreases. $[Na_2O]$ + $[K_2O]$ is preferably 12% or more, 15% or more, or particularly 15.5% or more. $[Na_2O]$ + $[K_2O]$ is preferably 25% or less, 22% or less, or particularly 20% or less, and may be, in some cases, 19% or less, or 18% or less.

$Li_2O$ is an optional component, and may be added in an amount of 1% or less, or even 0.5% or less. The glass composition may be substantially free of $Li_2O$.

Too small a molar ratio $[Na_2O]/([Na_2O]$ + $[K_2O])$ unnecessarily decreases the viscosity of the glass melt and severely deteriorates a molten salt in which the glass is immersed for chemical strengthening. Consequently, the performance in producing a chemically strengthened glass article decreases, and the manufacturing cost increases. Therefore, the ratio is preferably 0.5 or more, 0.61 or more, or particularly 0.75 or more, and may be, in some cases, 0.9 or more. On the other hand, too large a molar ratio $[Na_2O]/([Na_2O]$ + $[K_2O])$ may decrease the surface compressive stress achieved after chemical strengthening. Therefore, the ratio is preferably 1 or less, particularly 0.97 or less.

SrO and BaO remarkably prevent sodium ion movement in the glass, greatly decrease the surface compressive stress achieved after chemical strengthening, and greatly reduce the compressive stress layer depth. Therefore, the glass composition is preferably substantially free of SrO and BaO.

$ZrO_2$ promotes sodium ion movement in the glass and increases the surface compressive stress achieved after chemical strengthening. Addition of $ZrO_2$ can reduce the compressive stress layer depth. $ZrO_2$ can unintentionally increase the devitrification temperature of the glass. The glass composition may be substantially free of $ZrO_2$, but the content of $ZrO_2$ may be more than 0%. The content of $ZrO_2$ may be 0.01% or more, 0.05% or more, 0.1% or more, or even 0.5% or more, and may be 2.5% or less, 2% or less, or even 1.5% or less.

When the content of $ZrO_2$ is more than 0%, SrO is preferably added to reduce an increase in the devitrification temperature of the glass. In this case, the content of SrO is required to be more than 0%, and may be 0.01% or more, 0.05% or more, or even 0.1% or more. The content of SrO may be 3.5% or less, 3% or less, or even 2.5% or less.

$P_2O_5$ and $B_2O_3$ are optional components that accelerate melting of raw materials. However, these components facilitate erosion of a refractory material of a melting furnace, and condensate on the furnace wall after volatilization and then sometimes enter the glass melt as foreign matters. The glass composition is preferably substantially free of $P_2O_5$ and $B_2O_3$.

It is known that addition of a sulfuric acid salt as a part of a raw material promotes refining. When a sulfuric acid salt is added, $SO_3$ generated from the sulfuric acid salt is often left in the glass. $SO_3$ is an optional component, and the glass composition may be substantially free of $SO_3$. The content of $SO_3$ is preferably 0.5% or less, or 0.3% or less.

Examples of other optional components that can exert the refining effect include $As_2O_5$, $Sb_2O_5$, F, and Cl. However, these components have a major effect on the environment. When the glass composition includes F, the content of F is preferably 0.1% or less, 0.06% or less, or 0.05% or less, and the glass composition is more preferably substantially free of F. The glass composition is preferably substantially free of $As_2O_5$, $Sb_2O_5$, and Cl.

Iron oxide is an optional component serving as a colorant, and is also a typical impurity inevitably introduced from an industrial raw material of glass. Iron oxide is present in the glass composition as a divalent oxide (FeO) or a trivalent oxide ($Fe_2O_3$). When the glass composition is used for a cover glass of a display, the content of $Fe_2O_3$ is preferably low because coloring should not stand out. The content $[T\text{-}Fe_2O_3]$ of iron oxide calculated in terms of a trivalent oxide is preferably 0.5% or less, 0.3% or less, or 0.2% or less. When coloring is particularly strictly avoided, the content

[T-Fe$_2$O$_3$] of iron oxide calculated in terms of a trivalent oxide is preferably 0.02% or less, or 0.01% or less.

The glass composition of the present embodiment can contain an optional component other than the above, but it is preferred that the glass composition be substantially free of an optional component other than the above.

The glass composition of the present embodiment can have a low density. A glass sheet formed from a glass composition having a low density contributes to reduction of the weight of a product including the glass sheet.

In a preferred embodiment, the properties, specifically the elastic modulus, the density, and the temperature properties, that the glass composition according to the present invention can have are as follows.

A Young's modulus is preferably 65 GPa or more, or even 68 GPa or more. The Young's modulus may be 75 GPa or less. The density is preferably 2.6 g/cm$^3$ or less, 2.57 g/cm$^3$ or less, 2.5 g/cm$^3$ or less, 2.48 g/cm$^3$ or less, 2.47 g/cm$^3$ or less, or even 2.46 g/cm$^3$ or less. The specific elastic modulus is preferably 26 × 10$^6$ Nm/kg or more, 27 × 10$^6$ Nm/kg or more, 27.5 × 10$^6$ Nm/kg or more, 28 × 10$^6$ Nm/kg or more, or particularly 28.5 × 10$^6$ Nm/kg or more. The specific elastic modulus may be 31 × 10$^6$ Nm/kg or less. The specific elastic modulus is a value calculated by dividing the Young's modulus by the density. Such a high specific elastic modulus as described above is advantageous in terms of reducing deflection of a product including a glass sheet formed from the glass composition.

From the viewpoint of the density and the specific elastic modulus, a preferred embodiment of the glass composition according to the present invention can have the following properties.

Density: 2.6 g/cm$^3$ or less; and specific elastic modulus: 27.5 × 10$^6$ Nm/kg or more, or
density: 2.48 g/cm$^3$ or less; and specific elastic modulus: 27 × 10$^6$ Nm/kg or more,
even more, density: 2.57 g/cm$^3$ or less; and specific elastic modulus: 28.5 × 10$^6$ Nm/kg or more, or
density: 2.47 g/cm$^3$ or less; and specific elastic modulus: 28 × 10$^6$ Nm/kg or more,
or particularly, density: 2.465 g/cm$^3$ or less; and specific elastic modulus: 29 × 10$^6$ Nm/kg or more.

A devitrification temperature TL is preferably 1050°C or lower, or even 1000°C or lower. A shaping temperature T4 is preferably 1100°C or lower, and may be 1000°C or higher, or even 1040°C or higher. A difference ∆T (∆T = T4 - TL) determined by subtracting the devitrification temperature TL from the shaping temperature T4 is preferably 0°C or more, more preferably 5°C or more, even more preferably 10°C or more, much more preferably 15°C or more, particularly preferably 18°C or more, and may be 25°C or more. Here, the shaping temperature T4 is a temperature at which the viscosity measured by a platinum ball-drawing method is 10$^4$ dPa•s. The devitrification temperature TL is the highest temperature at which devitrification is observed in glass taken out of a temperature-gradient electric furnace, the glass being obtained by holding a crushed glass specimen in the furnace for 2 hours. In a preferred embodiment, the glass according to the present invention can have a low devitrification temperature as described above and a positive difference ∆T. The glass composition having a difference ∆T of 0°C or more is suitable for production by a float process.

The temperature T2, at which the viscosity is 10$^2$ dPa•s, of the glass composition of the present embodiment is preferably 1550°C or lower, or even 1500°C or lower. The glass-transition point Tg may be 500 to 600°C, or even 510 to 595°C. Too high T2 and Tg increase the difficulty of producing a glass sheet particularly by the float process. On the other hand, too low Tg tends to increase stress relaxation during chemical strengthening and decrease the surface compressive stress achieved after chemical strengthening.

A preferred linear thermal expansion coefficient is 85 × 10$^{-7}$ to 110 × 10$^{-7}$/°C, or even 90 × 10$^{-7}$ to 130 × 10$^{-7}$/°C. Here, the linear thermal expansion coefficient refers to the average linear thermal expansion coefficient in the temperature range of 50 to 350°C. The linear thermal expansion coefficient value is larger than that of common soda-lime glass used, for example, for windows of buildings and vehicles. A large linear thermal expansion coefficient has a shortening effect on the time required for chemical strengthening and a detachment prevention effect exhibited when a glass article formed from the glass composition of the present invention is adhered to a member formed of a metal or a plastic.

The glass composition of the present embodiment is suitable for mass production by the float process. By the float process, a glass sheet called float glass is produced from the glass composition according to the present invention. As is well known, the float process includes: melting glass raw materials in a melting furnace; and introducing the molten glass raw materials into a float bath to shape the molten glass raw materials into a glass sheet on molten tin in the float bath. In one embodiment of the present invention, float glass is produced by preparing glass raw materials such that a glass composition to be formed into a glass sheet has the above desirable composition. The float glass is shaped in a float bath with one principal surface in contact with molten tin, and the tin spreads over the principal surface. Accordingly, one principal surface, called a bottom surface, of the float glass has a surface layer formed of tin spread thereon. The other principal surface, called a top surface, does not have such a surface layer. From another perspective, in the float glass, the concentration of tin on one principal surface is higher than that on the other principal surface.

The glass sheet may be formed of a chemically strengthened glass. As is well known, chemical strengthening is a treatment in which compressive stress is introduced in a surface of a glass by substituting alkali ions contained in the glass with other alkali ions having a larger ionic radius, for example, by substituting lithium ions with sodium ions or sodium ions with potassium ions.

Chemical strengthening of the glass sheet is performed by bringing the glass sheet into contact with a molten salt commonly including alkali ions. The molten salt is, for example, potassium nitrate or a salt mixture of potassium nitrate and sodium nitrate. When the molten salt used includes potassium nitrate alone, it is appropriate that the molten salt be at a temperature of about 460°C to 500°C in view of thermal decomposition of potassium nitrate and the thermal resistance of the glass. It is appropriate that the time during which the glass and the molten salt are in contact with each other be, for example, 4 hours to 12 hours.

The thus-obtained chemically strengthened glass article of the present embodiment can have a very high surface compressive stress and a very large compressive stress layer depth.

Specifically, the surface compressive stress is 500 MPa or more, particularly 550 MPa or more, and the compressive stress layer depth is 10 $\mu$m or more,

preferably, the surface compressive stress is 800 MPa or more and the compressive stress layer depth is 15 $\mu$m or more, and

even more preferably, the surface compressive stress is 900 MPa or more and the compressive stress layer depth is 15 $\mu$m or more.

Therefore, since the chemically strengthened glass article of the present embodiment has a very high surface compressive stress, a scratch is less likely to be made on a surface of the article. Additionally, since the compressive stress layer depth is large, a scratch on the surface is less likely to go deeper than the compressive stress layer and reach the inside of the glass article. In the chemically strengthened glass article of the present embodiment, CS and DOL can satisfy the following relations:

$$-0.05 \times CS + 57 \leq DOL \leq -0.05 \times CS + 76;$$

and

$$500 \leq CS \leq 1200,$$

where CS represents the surface compressive stress in MPa and DOL represents the compressive stress layer depth in $\mu$m.

In the above relations, CS may be in the range of $500 \leq CS \leq 1100$.

Generally, in a glass article including a compressive stress layer near a surface thereof, elastic energy caused by a compressive stress in the compressive stress layer is in a good balance with elastic energy caused by a tensile stress (internal tensile stress) occurring inside the glass article. Therefore, the internal tensile stress increases with decreasing thickness of the glass article even when the surface compressive stress and the compressive stress layer depth are constant. Such a glass article has a reduced strength, and is broken when an external force beyond the limit of the internal tensile stress is applied thereto.

The chemically strengthened glass article of the present embodiment has a high strength because the compressive stress layer depth is not too large at the same time and thus a value of the internal tensile stress is not too high.

The chemically strengthened glass article of the present embodiment, specifically a glass sheet, is particularly suitable as a cover glass of a display. The glass sheet according to the present invention can also be used in other applications such as a window glass of, for example, an automobile.

EXAMPLES

Hereinafter, the present invention will be described in more detail using specific examples. The examples given below are not intended to limit the present invention, either.

Batches were prepared to give compositions shown in Tables 1 to 4 using silica, alumina, sodium carbonate, magnesium oxide, calcium carbonate, potassium carbonate, etc. which are common glass raw materials. Each of the prepared batches was put in a platinum crucible, held at 1580°C for 4 hours, and then poured onto an iron plate. This glass was held in an electric furnace at 650°C for 30 minutes, after which the furnace was turned off to cool the glass to room temperature. A glass specimen was thus obtained. Properties of thus-obtained glass specimens were measured by the following methods. Tables 1 to 4 show the results. It should be added that Examples 24 to 46 are examples described in Patent Literature 1.

[Density $\rho$ and Young's modulus E]

Sheet-shaped samples having dimensions of 25 × 25 × 5 mm were fabricated by cutting the glass specimens and mirror-polishing every surface thereof. A density $\rho$ of each sample was measured by Archimedes' principle. The Young's modulus of each sample was measured according to the ultrasonic pulse method in JIS R 1602-1995. Specifically, each sample used in the above density measurement was used to measure, for longitudinal and transverse waves, the sound speed at which an ultrasonic pulse propagated. The sound speeds and the above density were substituted in the formula defined in JIS R 1602-1995 to calculate a Young's modulus E. The propagation speeds were evaluated using an ultrasonic thickness gage MODEL 25DL PLUS manufactured by Olympus Corporation by dividing the time required by a 20 kHz ultrasonic pulse to propagate in the thickness direction of the sample, be reflected, and then come back by the propagation distance (twice the thickness of the sample).

[Glass-transition point Tg and linear thermal expansion coefficient $\alpha$]

A cylindrical specimen having a diameter of 5 mm and a length of 18 mm was fabricated from each glass specimen. The cylindrical specimen was heated at 5°C/minute using a TMA apparatus to measure a thermal expansion curve. From this curve, the glass-transition point Tg and the average linear thermal expansion coefficient $\alpha$ in the temperature range of 50 to 350°C were obtained.

[Measurement of devitrification temperature TL]

Each glass specimen was crushed into particles, which were sieved to obtain particles that pass through a sieve having an opening size of 2.83 mm and are left on a sieve having an opening size of 1.00 mm. These particles were washed to remove fine powder thereon, followed by drying to prepare a sample for devitrification temperature measurement. An amount of 25 g of the sample for devitrification temperature measurement was put in a platinum boat (a lidless rectangular platinum container) to have an approximately uniform thickness, held in a temperature-gradient furnace for 2 hours, and then taken out of the furnace. The highest temperature at which devitrification was observed in the glass was employed as the devitrification temperature TL of the sample.

[Measurement of melting temperature T2 and shaping temperature T4]

The viscosity was measured by a platinum ball-drawing method, and temperatures at which the thus-measured viscosity was $10^2$ dPa•s and $10^4$ dPa•s were respectively employed as the melting temperature T2 and the shaping temperature T4.

[Chemical strengthening]

The chemical strengthening of a glass sheet was performed by bringing the glass sheet into contact with a molten salt commonly including alkali ions. Two sheet-shaped samples having dimensions of 25 × 25 × 0.7 mm were fabricated by cutting the glass specimen and mirror-polishing principal surfaces thereof. Potassium nitrate was used as the molten salt.
The chemical strengthening was performed under the following conditions.

Temperature of molten salt: 420°C; duration of contact between glass and molten salt: 2 hours and 30 minutes, 4 hours, or 6 hours
Temperature of molten salt: 400°C; duration of contact between glass and molten salt: 4 hours

[Surface compressive stress CS and compressive stress layer depth DOL]

The surface compressive stress CS and the compressive stress layer depth DOL were measured for the chemically strengthened glass articles obtained in the above manner. A surface stress meter (SM-6000LE manufactured by Orihara Industrial Co., Ltd.) was used for the measurement. Specifically, the number of interference fringes and the intervals between the interference fringes were observed using the above surface stress meter, and the surface compressive stress CS and the compressive stress layer depth DOL were calculated using accompanying software. Not only the interference fringes but also a refractive index and a photoelastic constant are necessary for the calculation. The refractive index was defined as 1.511, and the photoelastic constant was determined by substituting the contents of the components in a known prediction equation (described in pp. 169 - 174 and 289 - 292 of M. B. Volf, (1988), "Mathematical Approach to Glass (Glass Science and Technology, Vol. 9)", Elsevier Science Ltd.).

In Tables 1 to 4, the content of a component X is simply expressed as "X" instead of [X], but the content of each component is in mol%.

Examples 41 to 43 and 46 to 48 are Comparative Examples. The CS is slightly low, namely 550 MPa or less, in Examples 41 and 46, the compressive stress layer depth DOL is small, namely less than 10 $\mu$m, in Examples 42, 43, 46, and 47, and T2 is higher than 1550°C in Example 48. Contrarily, in other Examples, the CS and DOL are both large, and T2 is not too high, namely 1550°C or lower.

Additionally, in each of Examples 1 to 25,

the difference $\Delta T$ ($\Delta T = T4 - TL$) obtained by subtracting the devitrification temperature TL from the shaping temperature T4 is 0°C or more,

the surface compressive stress CS is 500 to 1200 MPa,
the compressive stress layer depth DOL is 10 $\mu$m or more, and
the surface compressive stress CS in MPa and the compressive stress layer depth DOL in $\mu$m are in the following range:

$$-0.05 \times CS + 57 \le DOL \le -0.05 \times CS + 76.$$

In Examples 26 to 41, 44, and 45, the DOL is more than 10 $\mu$m, and T2 is 1550°C or lower, but the following relational expression is not satisfied.

$$-0.05 \times CS + 57 \le DOL \le -0.05 \times CS + 76$$

The results for Examples 1 to 25 were each desirable. However, when Examples 1 to 25 are compared with each other, the specific elastic modulus is slightly low in Examples 19 to 22, and the DOL is slightly low in Example 23 compared to in other examples in which the CS is at the same level. The properties are particularly in a good balance in Examples 1 to 18. Example 24 is advantageous in terms of the low devitrification temperature TL. Example 25 is advantageous in terms of easy achievement of a high CS.

[Table 1]

|  |  | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| $SiO_2$ | | 66.73 | 65.24 | 66.24 | 64.34 | 64.24 | 64.80 | 64.36 | 63.93 | 63.49 | 64.24 | 64.24 | 66.24 |
| $Al_2O_3$ | | 3.19 | 3.94 | 3.94 | 4.84 | 3.94 | 4.15 | 4.37 | 4.59 | 4.81 | 3.94 | 3.94 | 2.94 |
| MgO | | 13.87 | 13.87 | 13.87 | 13.87 | 14.87 | 13.87 | 13.87 | 13.87 | 13.87 | 13.87 | 13.87 | 13.87 |
| CaO | | 0 | 0 | 0 | 0 | 0 | 0 | 0 | 0 | 0 | 0 | 0 | 0 |
| SrO | | 0 | 0 | 0 | 0 | 0 | 0 | 0 | 0 | 0 | 0 | 0 | 0 |
| BaO | mol% | 0 | 0 | 0 | 0 | 0 | 0 | 0 | 0 | 0 | 0 | 0 | 0 |
| $ZrO_2$ | | 0 | 0 | 0 | 0 | 0 | 0 | 0 | 0 | 0 | 0 | 0 | 0 |
| $Na_2O$ | | 16.21 | 16.95 | 15.95 | 16.95 | 16.95 | 17.17 | 17.39 | 17.61 | 17.83 | 17.95 | 16.95 | 16.95 |
| $K_2O$ | | 0 | 0 | 0 | 0 | 0 | 0 | 0 | 0 | 0 | 0 | 1.00 | 0 |
| $Fe_2O_3$ | | 0.004 | 0.004 | 0.004 | 0.004 | 0.004 | 0.004 | 0.004 | 0.004 | 0.004 | 0.004 | 0.004 | 0.004 |
| RO | | 13.87 | 13.87 | 13.87 | 13.87 | 14.87 | 13.87 | 13.87 | 13.87 | 13.87 | 13.87 | 13.87 | 13.87 |
| MgO/RO | | 1.00 | 1.00 | 1.00 | 1.00 | 1.00 | 1.00 | 1.00 | 1.00 | 1.00 | 1.00 | 1.00 | 1.00 |
| $R_2O$ | | 16.21 | 16.95 | 15.95 | 16.95 | 16.95 | 17.17 | 17.39 | 17.61 | 17.83 | 17.95 | 17.95 | 16.95 |
| $Na_2O/R_2O$ | | 1.00 | 1.00 | 1.00 | 1.00 | 1.00 | 1.00 | 1.00 | 1.00 | 1.00 | 1.00 | 0.94 | 1.00 |
| $Al_2O_3/(SiO_2 + Al_2O_3)$ | | 0.046 | 0.057 | 0.056 | 0.070 | 0.058 | 0.060 | 0.064 | 0.067 | 0.070 | 0.058 | 0.058 | 0.042 |
| Density $g/cm^3$ | | 2.462 | 2.470 | 2.462 | 2.473 | 2.477 | 2.471 | 2.474 | 2.475 | 2.477 | 2.476 | 2.475 | 2.464 |
| Young's modulus GPa | | 7200 | 71.07 | 72.52 | 71.65 | 71.71 | 70.97 | 71.00 | 71.08 | 71.24 | 70.64 | 70.99 | 70.26 |
| Specific elastic modulus $10^6$ Nm/kg | | 29.25 | 28.78 | 29.46 | 28.97 | 28.95 | 28.72 | 28.70 | 28.71 | 28.76 | 28.53 | 28.69 | 28.52 |
| $T_2$ °C | | 1502 | 1473 | 1498 | 1480 | 1456 | 1470 | 1466 | 1462 | 1459 | 1449 | 1463 | 1466 |
| $T_4$ °C | | 1072 | 1056 | 1077 | 1068 | 1047 | 1055 | 1053 | 1051 | 1050 | 1036 | 1043 | 1044 |
| $T_L$ °C | | < 842 | < 834 | 1014 | 1044 | 1038 | < 820 | 971.3 | 993.1 | 1028 | < 826 | < 833 | < 841 |
| $T_4 - T_L$ °C | | > 230 | > 228 | 62.85 | 23.17 | 9.208 | > 240 | 81.73 | 58.13 | 2203 | > 216 | > 215 | > 208 |
| $\alpha$ $10^{-7}$°C$^{-1}$ | | 90.6 | 94.3 | 91.0 | 94.8 | 94.9 | 95.1 | 96.8 | 96.6 | 98.2 | 98.6 | 102.5 | 95.3 |
| Tg °C | | 578.4 | 579.8 | 588.1 | 590.8 | 583.5 | 582 | 580 | 579.4 | 583.1 | 571.5 | 563.1 | 569.7 |

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|
| Strengthening conditions | 420°C 4h | 420°C 4h | 420°C 4h | 420°C 4h | 420°C 4h | 420°C 4h | 420°C 4h | 420°C 4h | 420°C 4h | 420°C 4h | 420°C 4h | 420°C 4h |
| CS MPa | 895.6 | 899.6 | 932.7 | 974 | 948.1 | 907.6 | 906.5 | 908.6 | 922.2 | 846.9 | 835.9 | 815.7 |
| DOL $\mu$m | 20.3 | 21.0 | 19.0 | 19.5 | 18.9 | 20.1 | 21.2 | 21.3 | 21.4 | 22.5 | 25.0 | 21.7 |
| Strengthening conditions | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h |
| CS MPa | 1001 | 1026 | 1013 | 1074 | 1050 | 1015 | 1024 | 1034 | 1051 | 963.2 | 950.7 | 925.8 |
| DOL $\mu$m | 15.3 | 15.9 | 15.0 | 15.3 | 14.8 | 15.7 | 15.9 | 16.0 | 16.0 | 17.5 | 19.7 | 16.3 |

[Table 2]

| | | Ex. 13 | Ex. 14 | Ex. 15 | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|---|---|---|---|
| $SiO_2$ | mol% | 66.24 | 64.24 | 63.59 | 63.61 | 64.36 | 62.36 | 64.36 | 66.74 | 64.36 | 69.74 | 63.36 | 63.48 |
| $Al_2O_3$ | | 3.94 | 3.94 | 4.32 | 4.32 | 2.81 | 2.87 | 4.37 | 2.00 | 3.63 | 2.00 | 1.37 | 4.37 |
| $MgO$ | | 12.87 | 13.87 | 13.70 | 13.71 | 17.00 | 16.87 | 11.00 | 13.87 | 10.00 | 10.87 | 18.87 | 13.87 |
| $CaO$ | | 0 | 1 | 0 | 0 | 0 | 0.50 | 0 | 0 | 0 | 0 | 0 | 0 |
| $SrO$ | | 0 | 0 | 0 | 0 | 0 | 0 | 0 | 0 | 0 | 0 | 0 | 0 |
| $BaO$ | | 0 | 0 | 0 | 0 | 0 | 0 | 0 | 0 | 0 | 0 | 0 | 0 |
| $ZrO_2$ | | 0 | 0 | 0 | 0 | 0 | 0 | 0 | 0 | 0 | 0 | 0 | 0 |
| $Na_2O$ | | 16.95 | 16.95 | 18.39 | 18.36 | 15.82 | 17.39 | 17.39 | 17.39 | 16.00 | 17.39 | 16.39 | 18.27 |
| $K_2O$ | | 0 | 0 | 0 | 0 | 0 | 0 | 2.87 | 0 | 6.00 | 0 | 0 | 0 |
| $Fe_2O_3$ | | 0.004 | 0.004 | 0.004 | 0.004 | 0.004 | 0.004 | 0.01 | 0.004 | 0.01 | 0.004 | 0.004 | 0.004 |
| RO | | 12.87 | 14.87 | 13.70 | 13.71 | 17.00 | 17.37 | 11.00 | 13.87 | 10.00 | 10.87 | 18.87 | 13.87 |
| MgO/RO | | 1.00 | 0.93 | 1.00 | 1.00 | 1.00 | 0.97 | 1.00 | 1.00 | 1.00 | 1.00 | 1.00 | 1.00 |
| $R_2O$ | | 16.95 | 16.95 | 18.39 | 18.36 | 15.82 | 17.39 | 20.26 | 17.39 | 22.00 | 17.39 | 16.39 | 18.27 |
| $Na_2O/R_2O$ | | 1.00 | 1.00 | 1.00 | 1.00 | 1.00 | 1.00 | 0.86 | 1.00 | 0.73 | 1.00 | 1.00 | 1.00 |
| $Al_2O_3/(SiO_2 + Al_2O_3)$ | | 0.056 | 0.058 | 0.064 | 0.064 | 0.042 | 0.044 | 0.064 | 0.029 | 0.053 | 0.028 | 0.021 | 0.064 |
| Density g/cm$^3$ | | 2.462 | 2.484 | 2.479 | 2.479 | 2.480 | 2.498 | 2.472 | 2.466 | 2.474 | 2.444 | 2.493 | 2.480 |
| Young's modulus GPa | | 70.49 | 72.13 | 71.11 | 70.94 | 72.98 | 72.93 | 68.41 | 70.13 | 67.13 | 68.12 | 73.54 | 71.04 |
| Specific elastic modulus $10^6$ Nm/kg | | 28.63 | 29.04 | 28.68 | 28.62 | 29.42 | 29.20 | 27.67 | 28.44 | 27.14 | 27.87 | 29.50 | 28.64 |
| $T_2$ °C | | 1491 | 1443 | 1444 | 1445 | 1437 | 1387 | 1486 | 1448 | 1498 | 1500 | 1380 | 1444 |
| $T_4$ °C | | 1066 | 1039 | 1034 | 1034 | 1037 | 998.7 | 1040 | 1024 | 1027 | 1051 | 990.8 | 1035 |
| $T_L$ °C | | <826 | <841 | <820 | <833 | 1009 | 992.9 | 837.9 | 865.3 | 739.2 | 793.4 | 978.2 | <811 |
| $T_4 - T_L$ °C | | >245 | >204 | >219 | >207 | 27.76 | 5.762 | 202.6 | 158.2 | 287.3 | 257.3 | 12.62 | >224 |
| α $10^{-7}$°C$^{-1}$ | | 94.5 | 95.6 | 99.9 | 100.4 | 92.8 | 99.3 | 111.8 | 97.9 | 124.1 | 96.6 | 96.6 | 100.1 |
| Tg °C | | 577.6 | 575.8 | 570.9 | 570.9 | 582.2 | 571.3 | 544.2 | 557.5 | 511.9 | 551.6 | 568.3 | 571.7 |

(continued)

| | Ex. 13 | Ex. 14 | Ex. 15 | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|---|---|---|
| Strengthening conditions | 420°C 4 h | 420°C 4 h | 420°C 4 h | 420°C 4 h | 420°C 4 h | 420°C 4 h | 420°C 4 h | 420°C 4 h | 420°C 4 h | 420°C 4 h | 420°C 4 h | 420°C 6 h |
| CS MPa | 842.9 | 972.3 | 848 | 841.1 | 999.9 | 978.7 | 679.1 | 777.3 | 514.9 | 645.3 | 987.8 | 822.7 |
| DOL $\mu$m | 22.1 | 17.0 | 23.8 | 24.0 | 16.5 | 17.8 | 36.1 | 22.3 | 47.0 | 25.6 | 15.3 | 30.8 |
| Strengthening conditions | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h | 400°C 4 h |
| CS MPa | 957.4 | 1077 | 978.2 | 966.2 | 1070 | 1078 | 823.9 | 897.5 | 655.7 | 781.6 | 1063 | 1000 |
| DOL $\mu$m | 17.3 | 13.1 | 17.7 | 17.9 | 11.6 | 12.3 | 26.2 | 15.7 | 34.1 | 18.4 | 10.4 | 17.5 |

[Table 3]

| | | Ex. 25 | Ex. 26 | Ex. 27 | Ex. 28 | Ex. 29 | Ex. 30 | Ex. 31 | Ex. 32 | Ex. 33 | Ex. 34 | Ex. 35 | Ex. 36 |
|---|---|---|---|---|---|---|---|---|---|---|---|---|---|
| $SiO_2$ | mol% | 63.22 | 64.94 | 65.98 | 65.85 | 67.16 | 67.69 | 67.85 | 67.19 | 67.71 | 66.51 | 66.63 | 66.95 |
| $Al_2O_3$ | | 4.37 | 3.09 | 4.72 | 4.72 | 3.32 | 4.45 | 3.93 | 3.44 | 3.44 | 404 | 4.34 | 3.42 |
| MgO | | 11.63 | 13.87 | 8.41 | 8.58 | 10.94 | 8.26 | 9.95 | 11.80 | 11.79 | 11.84 | 11.86 | 13.21 |
| CaO | | 0 | 106 | 2.86 | 2.53 | 1.08 | 3.78 | 3.10 | 2.12 | 2.12 | 2.13 | 2.13 | 1.05 |
| SrO | | 2.24 | 0 | 0 | 0.18 | 0 | 0 | 0 | 0 | 0 | 0 | 0 | 0 |
| BaO | | 0 | 0 | 0 | 0 | 0 | 0 | 0 | 0 | 0 | 0 | 0 | 0 |
| $ZrO_2$ | | 1.14 | 0.92 | 1.00 | 1.00 | 1.32 | 0 | 0 | 0 | 0 | 0 | 0 | 0 |
| $Na_2O$ | | 17.39 | 16.12 | 15.72 | 15.83 | 16.18 | 15.82 | 15.16 | 15.45 | 14.95 | 15.49 | 1504 | 15.37 |
| $K_2O$ | | 0 | 0 | 1.31 | 1.31 | 0 | 0 | 0 | 0 | 0 | 0 | 0 | 0 |
| $Fe_2O_3$ | | 0.005 | 0 | 0 | 0 | 0 | 0 | 0 | 0 | 0 | 0 | 0 | 0 |
| RO | | 13.87 | 14.93 | 11.27 | 11.29 | 12.02 | 12.04 | 13.05 | 13.92 | 13.91 | 13.97 | 13.99 | 14.26 |
| MgO/RO | | 0.84 | 0.93 | 0.75 | 0.76 | 0.91 | 0.69 | 0.76 | 0.85 | 0.85 | 0.85 | 0.85 | 0.93 |
| $R_2O$ | | 17.39 | 16.12 | 17.03 | 17.14 | 16.18 | 15.82 | 15.16 | 15.45 | 14.95 | 15.49 | 1504 | 15.37 |
| $Na_2O/R_2O$ | | 1.00 | 1.00 | 0.92 | 0.92 | 1.00 | 1.00 | 1.00 | 1.00 | 1.00 | 1.00 | 1.00 | 1.00 |
| $Al_2O_3/(SiO_2 + Al_2O_3)$ | | 0.065 | 0.045 | 0.067 | 0.067 | 0.047 | 0.062 | 0.055 | 0.049 | 0.048 | 0.057 | 0.061 | 0.049 |
| Density $g/cm^3$ | | 2.562 | 2.506 | 2.512 | 2.514 | 2500 | 2.478 | 2.469 | 2.468 | 2.469 | 2.476 | 2.476 | 2.469 |
| Young's modulus GPa | | 73.8 | - | - | - | - | - | - | - | - | - | - | - |
| Specific elastic modulus $10^6$ Nm/kg | | 28.8 | - | - | - | - | - | - | - | - | - | - | - |
| $T_2$ °C | | 1445 | 1456 | 1496 | 1493 | 1501 | 1505 | 1507 | 1472 | 1496 | 1496 | 1504 | 1492 |
| $T_4$ °C | | 1060 | 1069 | 1086 | 1084 | 1100 | 1080 | 1084 | 1061 | 1080 | 1086 | 1091 | 1085 |
| $T_L$ °c | | < 830 | 1030 | 970 | 970 | 960 | 1010 | 1030 | 980 | 1030 | 1030 | 1050 | 1030 |
| $T_4 - T_L$ °C | | > 230 | 39 | 116 | 114 | 140 | 70 | 54 | 81 | 50 | 56 | 41 | 55 |
| $\alpha$ $10^{-7}$°$C^{-1}$ | | 96.4 | 90.8 | 101.2 | 97.4 | 90.7 | 93.1 | 89.8 | 93.1 | 91.0 | 900 | 90.3 | 93.0 |
| Tg °C | | 575.6 | 582.9 | 563 | 563 | 582 | 567 | 574 | 570 | 572 | 578 | 584 | 580 |

(continued)

|  | Ex. 25 | Ex. 26 | Ex. 27 | Ex. 28 | Ex. 29 | Ex. 30 | Ex. 31 | Ex. 32 | Ex. 33 | Ex. 34 | Ex. 35 | Ex. 36 |
|---|---|---|---|---|---|---|---|---|---|---|---|---|
| Strengthening conditions | 420°C 6 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h |
| CS MPa | 1008 | 844 | 771 | 745 | 800 | 749 | 751 | 743 | 758 | 779 | 794 | 761.3 |
| DOL μm | 19.1 | 12.0 | 17.9 | 18.5 | 15.6 | 14.0 | 13.5 | 14.1 | 13.6 | 13.9 | 13.4 | 15.1 |
| Strengthening conditions | 400°C 4 h | | | | | | | | | | | |
| CS MPa | 1152 | | | | | | | | | | | |
| DOL μm | 10.8 | | | | | | | | | | | |

[Table 4]

| | | Ex. 37 | Ex. 38 | Ex. 39 | Ex. 40 | Ex. 41 | Ex. 42 | Ex. 43 | Ex. 44 | Ex. 45 | Ex. 46 | Ex. 47 | Ex. 48 |
|---|---|---|---|---|---|---|---|---|---|---|---|---|---|
| $SiO_2$ | mol% | 66.96 | 66.99 | 66.96 | 67.58 | 66.72 | 66.92 | 66.89 | 61.03 | 60.76 | 70.94 | 68.67 | 64.23 |
| $Al_2O_3$ | | 3.43 | 3.44 | 3.45 | 2.57 | 0.58 | 3.43 | 3.41 | 4.10 | 4.02 | 1.11 | 2.96 | 7.96 |
| $MgO$ | | 12.07 | 11.36 | 9.92 | 11.37 | 13.18 | 5.68 | 7.89 | 17.38 | 18.03 | 6.77 | 6.15 | 10.53 |
| $CaO$ | | 2.12 | 2.86 | 4.26 | 3.82 | 1.05 | 8.60 | 6.42 | 0.84 | 0.42 | 8.26 | 7.54 | 0.11 |
| $SrO$ | | 0 | 0 | 0 | 0 | 0 | 0 | 0 | 0.23 | 0.23 | 0 | 0 | 0.12 |
| $BaO$ | | 0 | 0 | 0 | 0 | 0 | 0 | 0 | 0 | 0 | 0 | 0 | 0.08 |
| $ZrO_2$ | | 0 | 0 | 0 | 0 | 0 | 0 | 0 | 0 | 0 | 0 | 0 | 0.51 |
| $Na_2O$ | | 15.41 | 15.35 | 15.41 | 14.02 | 15.34 | 15.37 | 15.39 | 15.86 | 16.55 | 12.74 | 14.62 | 12.47 |
| $K_2O$ | | 0 | 0 | 0 | 0.63 | 3.13 | 0 | 0 | 0.56 | 0 | 0.19 | 0.06 | 3.97 |
| $Fe_2O_3$ | | 0 | 0 | 0 | 0 | 0 | 0 | 0 | 0 | 0 | 0 | 0 | 0 |
| RO | | 14.19 | 14.22 | 14.18 | 15.19 | 14.23 | 14.28 | 14.31 | 18.45 | 18.68 | 15.03 | 13.69 | 10.84 |
| MgO/RO | | 0.85 | 0.80 | 0.70 | 0.75 | 0.93 | 0.40 | 0.55 | 0.94 | 0.97 | 0.45 | 0.45 | 0.97 |
| $R_2O$ | | 15.41 | 15.35 | 15.41 | 14.65 | 18.47 | 15.37 | 15.39 | 16.42 | 16.55 | 12.93 | 14.68 | 16.44 |
| $Na_2O/R_2O$ | | 1.00 | 1.00 | 1.00 | 0.96 | 0.83 | 1.00 | 1.00 | 0.97 | 1.00 | 0.99 | 1.00 | 0.76 |
| $Al_2O_3/(SiO_2 + Al_2O_3)$ | | 0.049 | 0.049 | 0.049 | 0.037 | 0.009 | 0.049 | 0.049 | 0.063 | 0.062 | 0.015 | 0.041 | 0.110 |
| Density g/cm$^3$ | | 2.478 | 2.482 | 2.490 | 2.482 | 2.478 | 2.521 | 2.505 | 2.519 | 2.518 | 2.493 | 2.501 | 2.480 |
| Young's modulus GPa | | - | - | - | - | - | - | - | - | - | - | - | - |
| Specific elastic modulus 10$^6$ Nm/kg | | - | - | - | - | - | - | - | - | - | - | - | - |
| $T_2$ °C | | 1480 | 1475 | 1464 | 1488 | 1370 | 1434 | 1449 | 1415 | 1396 | 1447 | 1455 | 1601 |
| $T_4$ °C | | 1069 | 1064 | 1055 | 1057 | 978 | 1028 | 1042 | 1039 | 1026 | 1039 | 1042 | 1176 |
| $T_L$ °C | | 1040 | 1040 | 1080 | 1060 | 900 | 1040 | 1080 | 1160 | 1160 | 1030 | 1015 | 1154 |
| $T_4 - T_L$ °C | | 29 | 24 | -25 | -3 | 78 | -12 | -38 | -122 | -134 | 9 | 27 | 22 |
| $\alpha$ 10$^{-7}$°C$^{-1}$ | | 92.7 | 92.2 | 93.1 | 92.5 | 113.8 | 94.8 | 95.0 | 98.0 | 95.8 | 88.0 | 92.0 | 98.0 |
| Tg °C | | 569 | 569 | 564 | 556 | 513 | 564 | 562 | 576 | 580.7 | 557 | 556 | 604 |

| | Ex. 37 | Ex. 38 | Ex. 39 | Ex. 40 | Ex. 41 | Ex. 42 | Ex. 43 | Ex. 44 | Ex. 45 | Ex. 46 | Ex. 47 | Ex. 48 |
|---|---|---|---|---|---|---|---|---|---|---|---|---|
| Strengthening conditions | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h | 425°C 2.5 h |
| CS MPa | 742 | 738 | 730 | 696 | 545 | 707 | 719 | 787 | 817 | 542 | 634 | 717 |
| DOL $\mu$m | 13.3 | 12.6 | 11.3 | 11.3 | 19.9 | 7.3 | 9.2 | 11.5 | 11.3 | 6.0 | 9.0 | 33.2 |

**Claims**

1. A glass composition for chemical strengthening, comprising, as components, in mol%:

   60 to 80% $SiO_2$;
   1 to 5% $Al_2O_3$;
   5 to 25% MgO;
   0 to 5% CaO;
   10 to 20% $Na_2O$; and
   0 to 10% $K_2O$.

2. The glass composition for chemical strengthening according to claim 1, comprising, as components, in mol%:

   62 to 75% $SiO_2$;
   1 to 4.9% $Al_2O_3$;
   5 to 20% MgO;
   0 to 1% CaO;
   15.5 to 19% $Na_2O$; and
   0 to 10% $K_2O$, wherein
   a density is 2.50 g/cm$^3$ or less.

3. The glass composition for chemical strengthening according to claim 1 or 2, comprising, as components, in mol%:

   62 to 68% $SiO_2$;
   2.5 to 4.9% $Al_2O_3$;
   12 to 18% MgO;
   0 to 1% CaO;
   15.5 to 19% $Na_2O$; and
   0 to 1.5% $K_2O$.

4. The glass composition for chemical strengthening according to any one of claims 1 to 3, comprising, as components, in mol%:

   63 to 68% $SiO_2$;
   3 to 4.9% $Al_2O_3$;
   12 to 17% MgO;
   0 to 0.5% CaO;
   16 to 19% $Na_2O$; and
   0 to 0.1% $K_2O$.

5. The glass composition for chemical strengthening according to any one of claims 1 to 3, comprising, as components, in mol%:

   63 to 68% $SiO_2$;
   2.5 to 4.9% $Al_2O_3$;
   13 to 15% MgO;
   0 to 0.1% CaO;
   15.5 to 18% $Na_2O$; and
   0 to 1.5% $K_2O$, wherein
   a density is 2.48 g/cm$^3$ or less.

6. The glass composition for chemical strengthening according to claim 1, comprising, as components, in mol%:

   61 to 65% $SiO_2$;
   1 to 4.9% $Al_2O_3$;
   10 to 13% MgO;
   0 to 0.5% CaO;
   15.5 to 19% $Na_2O$;

more than 0% and 3.5% or less SrO; and
more than 0% and 2.5% or less $ZrO_2$, wherein
a density is 2.6 g/cm$^3$ or less.

7. The glass composition for chemical strengthening according to any one of claims 1 to 5, being substantially free of SrO and BaO.

8. The glass composition for chemical strengthening according to any one of claims 1 to 7, wherein, in mol%, MgO + CaO is 9 to 20%.

9. The glass composition for chemical strengthening according to any one of claims 1 to 8, wherein a molar ratio MgO/(MgO + CaO) is 0.91 to 1.

10. The glass composition for chemical strengthening according to any one of claims 1 to 9, wherein, in mol%, $Na_2O$ + $K_2O$ is 15.5 to 25%.

11. The glass composition for chemical strengthening according to any one of claims 1 to 10, wherein a molar ratio $Na_2O$/($Na_2O$ + $K_2O$) is 0.61 to 1.

12. The glass composition for chemical strengthening according to any one of claims 1 to 11, wherein a molar ratio $Al_2O_3$/($SiO_2$ + $Al_2O_3$) is 0.015 to 0.072.

13. The glass composition for chemical strengthening according to any one of claims 1 to 12, wherein

a Young's modulus is 65 to 75 GPa, and
a specific elastic modulus is $26 \times 10^6$ to $31 \times 10^6$ Nm/kg.

14. The glass composition for chemical strengthening according to any one of claims 1 to 13, wherein a temperature T2 at which a viscosity is $10^2$ dPa•s is 1550°C or lower.

15. The glass composition for chemical strengthening according to any one of claims 1 to 14, wherein

a temperature T4 at which a viscosity is $10^4$ dPa•s is 1100°C or lower, and
T4 - a devitrification temperature TL is 0°C or more.

16. The glass composition for chemical strengthening according to any one of claims 1 to 15, wherein an average thermal expansion coefficient between 50 to 350°C is $85 \times 10^{-7}$ to $110 \times 10^{-7}$°C$^{-1}$.

17. The glass composition for chemical strengthening according to any one of claims 1 to 16, wherein a glass-transition point Tg is 510 to 595°C.

18. A chemically strengthened glass article, comprising the glass composition for chemical strengthening according to any one of claims 1 to 17, wherein

a surface compressive stress is 500 MPa or more, and
a compressive stress layer depth is 10 $\mu$m or more.

19. The chemically strengthened glass article according to claim 18, wherein

the surface compressive stress is 800 MPa or more, and
the compressive stress layer depth is 15 $\mu$m or more.

20. The chemically strengthened glass article according to claim 19, wherein

the surface compressive stress is 900 MPa or more, and
the compressive stress layer depth is 15 $\mu$m or more.

21. The chemically strengthened glass article according to any one of claims 18 to 20, wherein CS and DOL satisfy the following relational expressions:

$$-0.05 \times CS + 57 \leq DOL \leq -0.05 \times CS + 76;$$

and

$$500 \leq CS \leq 1200,$$

where CS represents the surface compressive stress in MPa and DOL represents the compressive stress layer depth in $\mu$m.

**INTERNATIONAL SEARCH REPORT**

| International application No. |
|---|
| PCT/JP2021/024818 |

A.  CLASSIFICATION OF SUBJECT MATTER
Int. Cl. C03C3/085(2006.01)i, C03C3/087(2006.01)i, C03C21/00(2006.01)i
FI: C03C3/085, C03C3/087, C03C21/00 101

According to International Patent Classification (IPC) or to both national classification and IPC

B.  FIELDS SEARCHED

Minimum documentation searched (classification system followed by classification symbols)
Int. Cl. C03C3/085, C03C3/087, C03C21/00

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)
INTERGLAD

C.  DOCUMENTS CONSIDERED TO BE RELEVANT

| Category* | Citation of document, with indication, where appropriate, of the relevant passages | Relevant to claim No. |
|---|---|---|
| X | JP 2017-043534 A (ASAHI GLASS CO., LTD.) 02 March 2017 (2017-03-02), example 1, table 1, claims, paragraphs [0026], [0028] | 1-21 |
| X<br>A | JP 2017-114718 A (CENTRAL GLASS CO., LTD.) 29 June 2017 (2017-06-29), examples 2, 5, tables 1, 2, claims | 1-3, 5, 7-21<br>4, 6 |
| X<br><br>A | WO 2015/199150 A1 (ASAHI GLASS CO., LTD.) 30 December 2015 (2015-12-30), example 6, table 1, claims | 1-2, 7, 9-15, 17-21<br>3-6, 8, 16 |

☐  Further documents are listed in the continuation of Box C.   ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28.07.2021 | 10.08.2021 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

INTERNATIONAL SEARCH REPORT
Information on patent family members

International application No.

PCT/JP2021/024818

| Patent Documents referred to in the Report | Publication Date | Patent Family | Publication Date |
|---|---|---|---|
| JP 2017-043534 A | 02.03.2017 | US 2017/0001903 A1 example 1, table 1, claims, paragraphs [0029], [0031] EP 3124446 A1 CN 106132888 A | |
| JP 2017-114718 A | 29.06.2017 | (Family: none) | |
| WO 2015/199150 A1 | 30.12.2015 | US 2017/0121220 A1 example 6, table 1, claims EP 3162772 A1 CN 106660857 A | |

Form PCT/ISA/210 (patent family annex) (January 2015)

## REFERENCES CITED IN THE DESCRIPTION

**Patent documents cited in the description**

• WO 2015147092 A1

**Non-patent literature cited in the description**

• **M. B. VOLF.** Mathematical Approach to Glass (Glass Science and Technology. Elsevier Science Ltd, 1988, vol. 9, 169-174, 289-292